(19)

Europäisches Patentamt
European Patent Office
Office européen des brevets

(11) **EP 3 156 954 A1**

(12) **EUROPEAN PATENT APPLICATION**

(43) Date of publication:
**19.04.2017 Bulletin 2017/16**

(51) Int Cl.:
***G06Q 10/08*** *(2012.01)*

(21) Application number: **15190250.9**

(22) Date of filing: **16.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Mastercard International Incorporated
Purchase NY 10577 (US)**

(72) Inventors:
 • HOSNY, Ahmed
  Dublin 18 (IE)
 • GROARKE, Peter J
  Dublin 18 (IE)
 • MCGUIRE, John
  co. Galway (IE)

(74) Representative: **Gill Jennings & Every LLP
The Broadgate Tower
20 Primrose Street
London EC2A 2ES (GB)**

(54) **SYSTEMS AND METHODS FOR IDENTIFYING AND MONITORING A SUPPLY NETWORK USING A PAYMENT PROCESSING NETWORK**

(57)    Systems and methods for detecting and monitoring a supply network are provided. Based on payment transaction data acquired through a payment processing network in relation to a plurality of payment transactions, a server detects supply chains, each comprising a plurality of suppliers downstream to a respective merchant, and determines, for each pair of sequential suppliers in the supply chain, a downstream velocity pattern of a respective connection linking the pair of sequential suppliers. The server also monitors payment transaction data acquired through the payment processing network to detect deviations from the downstream velocity patterns. In response to detecting a deviation, the server automatically generates a notification indicating a potential supply problem with an upstream supplier in the pair associated with the downstream velocity pattern for which the deviation was detected. Such a notification is then transmitted to the respective merchant and/or intermediate suppliers.

FIG. 1

EP 3 156 954 A1

**Description**

**Field of the Invention**

The present disclosure relates generally to payment processing networks and associated processing methods and systems. In particular, but not exclusively, the disclosure relates to methods and systems for identifying, monitoring, and redirecting supply chains between users of a payment processing network through analysis of payment transactions carried out using the payment processing network.

**Background of the Invention**

Most modern day monetary transactions are processed through payment processing networks. For example, MasterCard Worldwide Network is one of the world's largest global telecommunications networks linking all MasterCard members and MasterCard data processing centres into a single financial network. The MasterCard Worldwide Network routes payment transactions between the MasterCard members from almost anywhere in the world and facilitates their authorization, clearing, and settlement.

The payment processing networks form an integral part of what is commonly known as a "four-party" or "open loop" payment system. In the "open loop" payment system, transfers may occur between two financial institutions (serving respective customers) that do not have a contractual relationship with each other and are possible because they are the members of the system. Typical four parties in the "open loop" payment system are an account holder, a merchant, an issuing financial institution (issuer), and an acquiring financial institution (acquirer). The account holder may be an individual or a business.

The account holder is a customer of the issuer. The issuer maintains an account for the account holder, and also often provides the account holder with a payment device in association with the account, commonly in the form of an Integrated Circuit Card (ICC), such as a MasterCard payment card. The role of the payment device is to provide information necessary for processing a payment transaction while ensuring the appropriate level of security for the underlying data. Payment transaction processing often requires verification of the payment device holder that includes evaluation of whether the person presenting the payment device is the legitimate holder of the payment device.

The merchant is typically a seller of goods or services to individuals and/or businesses, and is a customer of the acquirer. The acquirer maintains an account of the merchant and facilitates receiving of funds by the merchant once the payment transactions clear.

The payment network acts as a fifth party which links the four parties involved in the payment process, thereby facilitating the authorisation, clearing, and settlement of the payment transactions.

Each payment transaction typically requires a number of exchanges between the parties. These exchanges may generally be viewed as being conducted in four stages: (1) interaction, (2) authorisation, (3) clearing, and (4) settlement.

At the interaction stage, the merchant acquires account credentials of the account holder, such as the payment device credentials. For example, a POS terminal of the merchant may be used to read the payment device credentials, including the account holder's account information, from a chip or a secure element embedded in the payment device of the account holder. In a business-to-business transaction, such account credentials may be provided by the account holder to the merchant directly.

During the authorisation stage, the account credentials and the availability of funds in the respective account are confirmed. The merchant transmits electronically the captured data to the acquirer, requesting authorisation of the payment transaction. The request may also include the transaction amount.

The payment processing network enables the acquirer to forward the authorisation request to the issuer, who determines whether to authorise or decline the payment transaction. If the issuer authorises the payment, it decreases availability of funds on the account of the account holder and issues an authorisation code to the merchant. The authorisation code is then transmitted back to the merchant through the payment processing network and the acquirer.

During the clearing stage, the payment processing network facilitates transmission of the transaction data between the parties to ensure that all parties have the necessary and correct information for settling the transaction, and that the transaction is settled according to the payment guidelines and rules established by the payment processing network. Finally, during the settlement stage, the payment system network facilitates the exchange of funds so that the appropriate parties are paid in relation to the transaction.

To facilitate authorisation, clearing, and settlement of the payment transactions, the payment processing network requires and collects various data in relation to the payment transactions. Such data includes, but is not limited to, an Acquirer ID (identification data), Card Acceptor ID (Merchant ID), Merchant Name, Merchant Category Code (MCC), Stock Keeping Unit (SKU) identifying items in the transaction, and Transaction Amount. Generally, data exchange in respect of a payment transaction is more detailed during the clearing stage than during the authorisation stage. For example, the SKU description associated with a particular payment transaction may become known to the payment processing network only at the clearing stage.

The description of the parties in the "open loop" system is based on the direction of a payment transaction. Therefore, the same entity may function as an account holder and as a merchant in different payment transactions. This is particularly common in business-to-business transactions, where the same business may act as a buyer in one transaction and as a seller in another transaction. Similarly, the same financial institution may act as the acquirer or as the issuer depending on whether its customer is a seller or a buyer in a particular payment transaction.

For example, a merchant that is in the business of selling computers may buy components (e.g., hard drivers) from other merchant(s) (supplier merchants) to manufacture its goods - computers. Therefore, although the merchant acts as a seller (supplier merchant) when it sells the computers, it also acts as a buyer (a buyer merchant) when it buys components to make the computers it ultimately sells. Accordingly, using the terminology of the "open loop" system, as the buyer merchant, the merchant acts as an account holder, while its financial institution acts as an issuer. The supplier merchant however may also be a buyer merchant, and thus also act as an account holder in the terms of the "open loop" system. For example, the supplier merchant may need to acquire components, e.g., circuit boards, for manufacturing its goods, i.e., hard drives.

A payment processing network may facilitate payment transactions for any number of merchants that act as sellers and/or buyers. Such merchants may form one or more supply networks. Merchants in a particularly supply network may be in the same geographic local and/or be spread across the globe. A supply network generally includes a plurality of supply chains, where some supply chain may include common sub-chains, while other supply chains may be completely independent of each other.

A supply chain is typically a plurality of supplier merchants arranged sequentially, with each supplier merchant supplying its products to the next downstream supplier merchant in the supply chain. A supply chain may include a plurality of branches and/or loops. A given merchant may receive the same product (type of goods) from a plurality of supplier merchants. Also a given single supplier merchant may supply the same product (type of goods) to a plurality of merchants and/or supplier merchants downstream a supply chain. With the exception of the originator(s) of the supply chain, each of the supplier merchants in the supply chain also acts as the buyer merchant in its transactions upstream the supply chain. In the context of this disclosure, the end-buyer merchant of a particular supply chain, or its selected sub-chain, is generally referred to as a merchant, while the remaining supplier merchants in the supply chain, or the sub-chain, including the originator (s), are referred to as suppliers.

Some supply networks may include rather extensive supply chains, in which a merchant may not be aware of supplier(s) that exist and form the supply chain, other than of supplier(s) with whom the merchant deals directly (or is separated from the merchant by one or two degrees). Consequently, when a problem with the supply (e.g., undelivered goods, different quality goods, and the like) to the merchant arises, it may not know of the reason that caused the problem (what supplier triggered the problem in the supply chain). Moreover, even when the merchant knows its suppliers, the suppliers may not be forthcoming with information that a problem with the supply may arise and its reasons. Therefore, merchants typically address supply problems only after their occurrence. This sometimes causes a production break and merchant's products being out of stock, thereby reducing the merchant's profits. Furthermore, remedying problems is often more expensive than preventing such problems from occurring, both in the money and resources terms.

There is therefore a need to provide for a mechanism that would enable merchants to learn about a potential supply problem before it becomes their supply problem, whether such a problem is caused by a supplier known to the merchant or not. More generally, there is a need for methods and systems that enable detection of supply networks, its members, and supply chains forming the supply networks. There is a further need for methods and systems that enable monitoring the supply networks for potential problems and notifying merchants that may become affected by such problems about the potential problems. There is also a need for methods and systems that are able to determine alternative supply chain(s) that avoid the potential problems and recommend such alternative supply chains to the merchants that could be affected by the problems and benefit from redirection of their supply chain.

**Summary of the Invention**

The described embodiments of the invention provide for methods and systems for detecting and monitoring a supply network based on payment transaction data.

In one embodiment, the present disclosure provides a computer-implemented method for detecting and monitoring a supply network. The method comprises, based on payment transaction data acquired through a payment processing network in relation to a first plurality of payment transactions, detecting, at a server, a first supply chain comprising a plurality of suppliers downstream to a first merchant, and determining, at the server, for each pair of sequential suppliers in the first supply chain, a downstream velocity pattern of a respective connection linking the pair of sequential suppliers. The method further comprises detecting, at the server, based on payment transaction data acquired through the payment processing network in relation to a second plurality of payment transactions, a deviation from one of the downstream velocity patterns; and in response to detecting the deviation, automatically generating at the server a notification, for the first merchant, indicating a potential supply problem with an upstream supplier in the pair associated with the downstream velocity pattern for which the deviation was detected.

In this manner, the disclosed system is able to detect supply networks automatically, based on payment transaction data and without seeking input from the members of the supply chain. The disclosed system is further able to monitor the supply network for potential supply problems and notify relevant parties, before the supply problems starts affecting such parties. Therefore, a merchant is notified about a potential supply problem before it becomes that merchant's supply problem, whether such a problem is caused by a supplier known to the merchant or not, enabling the merchant to address the problem in a timely manner, before the supply problem causes a production break or the like. Thus, expenditure that would be required to remedy the once it reaches the merchant are prevented.

In some example embodiments, the server generates the notification if the deviation exceeds a pre-defined deviation threshold and/or the upstream supplier is separated from the merchant by a separation degree outside of a pre-defined degree threshold.

In some example embodiments, the method further comprises receiving from the merchant, input data indicating a preferred deviation value and/or a preferred separation degree for triggering generation of notifications concerning potential supply problems; if the input data indicating the preferred deviation is received, establishing, through a rule engine of the server and based on the preferred deviation value, a deviation rule defining the deviation threshold; and if the input data concerning the preferred separation degree is received, establishing, through the rule engine of the server and based on the preferred separation degree, a degree rule defining the degree threshold.

In this manner, notifications about potential supply problems that are tailored to a particular merchant or merchant supplier needs.

In some example embodiments, the method further comprises, for each supplier in the supply network, determining a type of goods or services provided by the supplier, based on stock keeping unit description data acquired through the payment processing network in association with one or more payment transactions between the supplier and a corresponding merchant; and storing the determined type of goods in association with the supplier.

In some example embodiments, the method further comprises determining, for the first merchant, an alternative supply chain comprising the first supply chain having one or more sequential suppliers, including the upstream supplier, replaced with one or more sequential suppliers of the supply network different from the one or more sequential suppliers of the first supply chain.

Thus, the merchant or merchant supplier is provided with a possible solution to avoid the supply problem is automatically.

In some example embodiments, a type of goods supplied by a sub-chain consisting of the one or more sequential suppliers of the first supply chain is the same as a type of goods supplied by a sub-chain consisting of the one or more sequential suppliers of the supply network.

In some example embodiments, the alternative chain comprises at least one previously undetected connection between suppliers in the supply network.

In some example embodiments, at least some of the one or more sequential suppliers of the supply network replacing the one or more suppliers in the first chain form a sub-chain of a supply chain network previously detected by the server in the supply network.

In some example embodiments, the sub-chain consisting of the one or more sequential suppliers of the first supply chain and the sub-chain consisting of the one or more sequential suppliers of the supply network are of different lengths.

In some example embodiments, the one or more sequential suppliers of the supply network replacing the one or more sequential suppliers in the first chain are selected from the supply network based on one or more of: a distance to the first merchant, a distance to at least one of suppliers in the first supply chain that are being replaced, a distance to at least one of suppliers remaining the first supply chain, a distance to at least one other of the one or more sequential suppliers from the supply network, a weather forecast for locations associated with at least one of the one or more sequential suppliers from the supply network, transit data for possible transit routes servicing downstream the alternative supply chain, including at least one of the one or more sequential suppliers from the supply network, or economical characteristics associated with at least one of the one or more sequential suppliers from supply network.

In some example embodiments, the method further comprises transmitting the notification indicating the potential supply problem with the upstream supplier from the server to the first merchant.

In some example embodiments, the method further comprises transmitting the notification indicating the potential supply problem with the upstream supplier to one or more sequential suppliers in the first supply chain that are downstream of the upstream supplier.

In some example embodiments, the method further comprises: based on payment transaction data gathered through the payment processing network in relation to a third plurality of payment transactions, detecting, at the server, a second supply chain comprising a plurality of suppliers downstream to a second merchant; and determining, at the server, for each pair of sequential suppliers in the second supply chain, a downstream velocity pattern of a respective connection linking the pair of sequential suppliers.

In some example embodiments, the method further comprises: detecting, at the server, based on payment transaction data acquired through the payment processing network in relation to a fourth plurality of payment transactions, a deviation from one of the downstream velocity patterns associated with the second supply chain; in response to detecting the deviation for the second supply chain, automatically generating, at the server, a second notification for the second merchant indicating a potential supply problem with an upstream supplier in the second supply chain in the pair associated with the downstream velocity pattern for which the deviation for the second supply chain was detected; and transmitting the second notification from the server to the second merchant.

In some example embodiments, the method further comprises: constantly analysing incoming payment transaction data acquired through the payment processing network in relation to payment transactions to detect new supply chains and/or update previously detected supply chains and determine and/or update respective velocity patterns.

In another embodiment, a detection and notification system is provided. The system comprises: at least one processor; a server; a memory storing instructions, which when executed by the least one processor cause the server to carry out the method of any preceding claims to detect and monitor the supply network; and a storage for maintaining data concerning detected supply chains and corresponding velocity patterns.

**Brief Description of the Drawings**

Embodiments of the present invention will be described, by way of example only, with reference to the accompanying drawings, in which:

FIGURE 1 is a diagram of a multi-party payment transaction system suitable for employing a monitoring and notification system, according to some embodiments of the present invention;

FIGURE 2 is a more detailed diagram of a monitoring and notification system and its subscribers, according to some embodiments of the present invention;

FIGURE 3 shows a flow diagram of a method for detecting and monitoring supply network, according to some embodiments of the present invention; and

FIGURE 4 shows an example an example of a supply network detected and monitored by a monitoring and notification system, according to some embodiments of the present invention.

**Detailed Description**

The described embodiments provide for methods and systems of identifying a supply network formed of users of a payment processing network and monitoring for potential abnormalities and/or problems in the supply chains of the supply network. The described methods and systems also facilitate redirection of the supply chains experiencing a potential problem (anomaly, abnormality, and/or the like), automatically or in response to a subscriber's request, by determining and recommending alternative supply chain(s).

In accordance with the methods and systems of the present disclosure, and more generally, the principles and techniques described herein, payment transactions that are carried out using the payment processing network, and in particular, clearing and authorisation data associated with the payment transactions, are analysed for patterns of transactions (behaviour patterns) to determine supply chains established between the users of the payment processing network, such as between merchants and suppliers. Using cross-transactions pattern analysis, the determined supply chains are monitored to detect anomalies (out-of-pattern behaviour) and identify or predict potential problems. Once a potential problem is detected for a specific supply chain, respective merchant(s) downstream of where the potential problem is detected are notified of the problem. This advantageously enables the merchant(s) to remedy the situation before the potential problem becomes real (or expands to reach the merchant(s)).

The methods and systems of the present disclosure also employ a business rule engine for setting rules defining scenarios which trigger notification of the merchant of a potential problem.

Examples of rules include defining a certain percentage in relation to the average behaviour such as that behaviour outside of a set threshold triggers a notification about a potential problem, a degree of separation of the problem from the merchant that identifies when the merchant is or is not interested in receiving notifications, and other rules. Use of the business rule engine to set the rules for triggering notification, whether by the merchants or by a system provider, allows for customisation of the merchants' experience and ensures that the merchants are notified only about potential problems that they perceive as relevant.

The methods and systems of the present disclosure further provide for determining one or more potential alternative supply routes or chains to avoid the identified problem, based on the data gathered in respect of the existing supply nodes and chains of the supply network. Such alternative chain(s) are then recommended to the merchant(s), automatically, or in response to a request, such as a request generated upon receipt of the notification about the problem. In this manner, not only the relevant merchants are notified about a potential problem of which they may not be aware, but also they are provided with a potential solution.

By gathering, collating, and analysing clearing and authorisation data of the payment transactions executed in the payment processing network, a complete supply chain to a merchant, comprising one or more sequential suppliers can be detected automatically, without requiring the merchant and/or suppliers in the supply chain to expressly share their relations with the service provider. Therefore, the methods and systems described herein advantageously provide for a mechanism that enables detection of potential problem(s) in the supply chain for merchants who are not necessarily aware of all suppliers in the supply chain and/or where supplier(s) do not volunteer information about the potential problem of their own accord, regardless of whether they are the source of the problem.

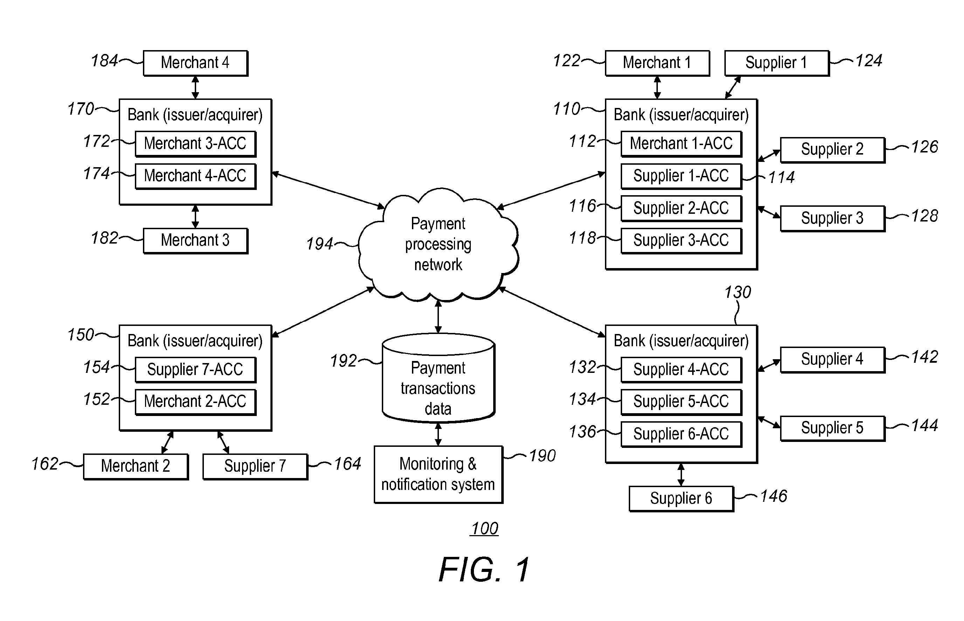

FIGURE 1 is a diagram of a multi-party payment transaction system 100 suitable for employing a monitoring and notification system, according to some embodiments of the present invention. More specifically, the system 100 includes a number of financial institutions (banks) 110, 130, 150, and 170, who can act as issuers and acquirers and are connected through a payment processing network 194. Each of the financial institutions 110, 130, 150, and 170 may have one or more merchants and suppliers associated therewith, such as merchants 1 to 4, identified by reference numbers 122, 162, 182, and 184 respectively, and suppliers 1 to 7, identified by reference numbers 124, 126, 128, 142, 144, and 164 respectively.

Each of the financial institutions 110, 130, 150, and 170 maintains accounts for the corresponding merchants and suppliers. In particular, the bank 110 maintains a merchant account 112 and supplier accounts 114, 116, and 118 for the merchant 122 and suppliers 124, 126, and 128 respectively. The bank 130 maintains supplier accounts 132, 134, and 136 for the suppliers 142, 144, and 144 respectively. The bank 150 maintains a merchant account 152 and a supplier account 152 for the merchant 162 and supplier 164 respectively. Finally, the bank 170 maintains merchant accounts 172 and 174 for the merchants 182 and 184 respectively. As discussed in other parts of this disclosure in more detail, merchants may act as suppliers and vice versa and the specific role of the merchant or supplier is determined on per-transaction basis.

The payment processing network 194 facilitates payment transactions between the merchants and suppliers, and in particular, facilitates authorisation, clearing, and settlement of such transactions in the manner as described above. To enable the authorisation, clearing, and settlement, the payment processing network 194 gathers various data in relation to the payment transactions, including but not limited to, acquirer IDs (identification data), Card Acceptor ID (Merchant ID), Merchant ID, Merchant Name, Transaction Amount, addresses of the merchants, Stock Keeping Unit (SKU) description identifying items in the transaction, and shares the data, where appropriate, with the financial institutions 110, 130, 150, and 170. The acquired payment transaction data is then stored in a database 192.

The system 100 further includes a monitoring and notification system 190, which uses payment transaction data gathered by the payment processing network 194 to detect, update, and monitor supply network(s) formed of the merchants and suppliers shown in FIGURE 1. The monitoring and notification system 190 is further configured to identify individual supply chains within such network(s) and monitor for potential abnormalities and/or problems in the identified supply chains based on the payment transaction data 192. The monitoring and notification system 190 may also be configured to facilitate redirection of the supply chains in relation to which a potential supply problem has been determined and recommend to respective merchants alternative supply chain(s).

To benefit from the monitoring, notification, and redirections services of the monitoring and notification system 190, a merchant/supplier needs to subscribe to such services. In some embodiments, the subscribers are able customise their experience with the system 190. For example, the merchant/supplier does not need to subscribe to all services, and may be enabled to pre-define a degree of deviation from the established patterns of behaviour and/or degree of separation from the source of a potential problem that trigger issuance of the notification about the potential problem.

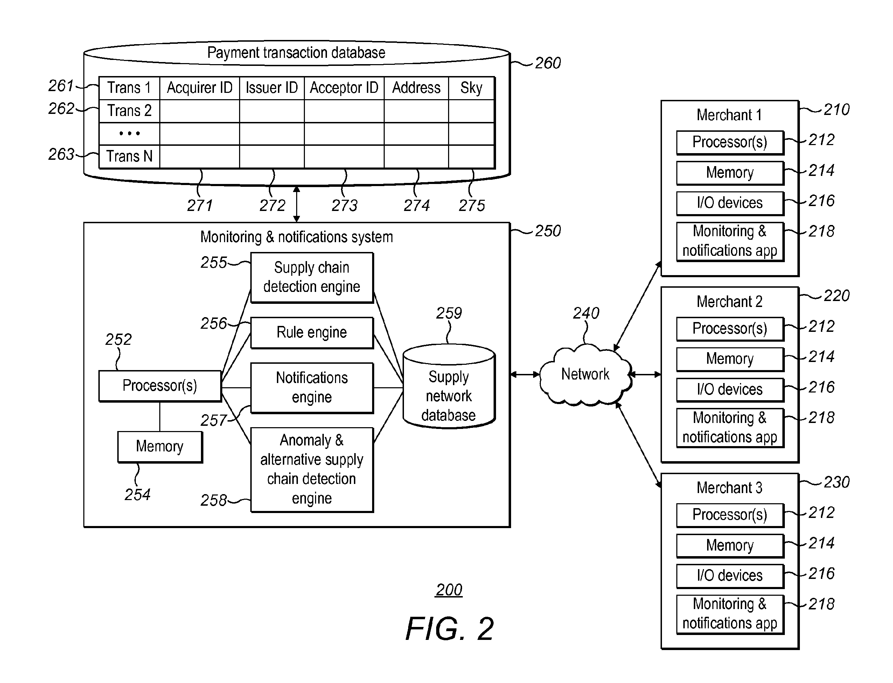

FIGURE 2 is a diagram 200 of a monitoring and notification system 250 and its subscribers 210, 220, and 230, according to some embodiments of the present invention. It provides a more detailed view of the parties.

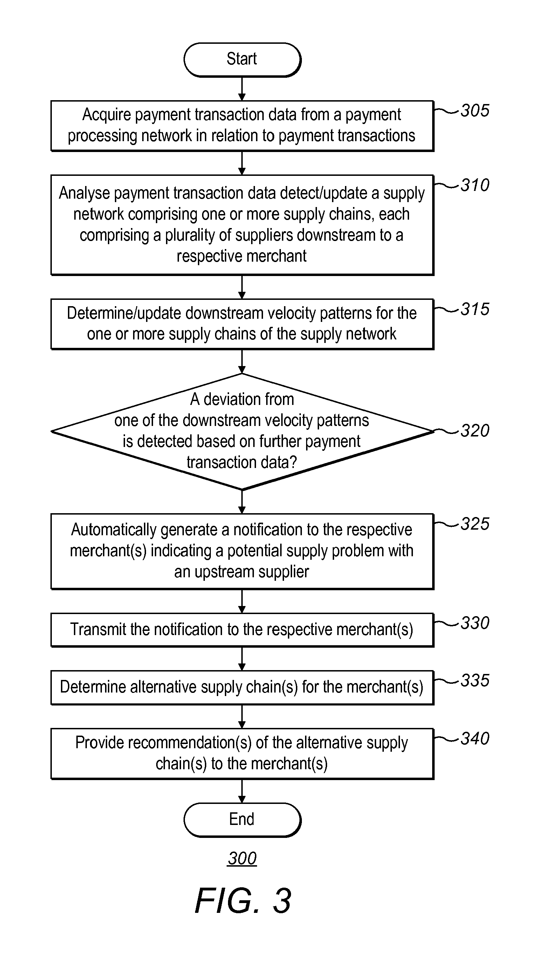

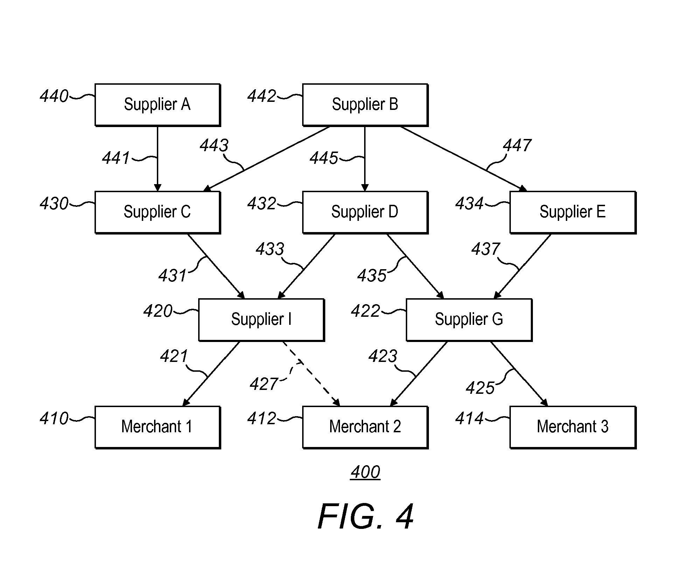

More specifically, each subscriber 210, 220, and 230 includes one or more processors 212, memory 214, and input and output devices 216, such as a display and a keyboard and a mouse. Additionally, the subscribers 210, 220, and 230 may have a monitoring and notification application 218 installed in their respective memory 214. When executed by the processor 212, the application 218 causes the processor to enable the merchant 210, 220, or 230 to communicate with the monitoring and notification system 250 through a communications network 240. For example, the merchants 210, 220, and 230 may receive notifications concerning potential problems detected in the supply network monitored by the system 250 through the application 218, and may also be able to request a recommendation for an alternative supply chain that avoids the potential supply problem(s). The merchants 210, 220, and 230 may further be enabled to pre-define their preferences for triggering notifications about the potential problems in the supply network (described in greater detail in respect of Figures 3 and 4).

The monitoring and notification system 250 includes a number of components that enable it to provide the monitoring services to the subscribed merchants. In particular, the system 250 includes one or more processors 252, memory 254, a supply network database 259 for storing data concerning the supply network and its characteristics, and a number of engines configured to perform functionalities of the system 250.

A supply chain detection engine 255 is configured to analyse payment transaction data concerning payment transactions processed by the payment processing network to detect (build), and then update a supply network. The payment transaction data may be received from a storage facility 260 of the payment transaction network and includes a variety of data describing the payment transactions. For example, for payment transactions 261, 262, 263, the payment transaction data may include an acquirer ID 271, issuer ID 272, acceptor ID 273 (identifying the supplier), address 274 of the respective merchant and/or supplier, SKU 275, and other relevant data describing the payment transaction.

A rule engine 256 is generally a software system configured to define, deploy, execute, monitor, and maintain the variety and complexity of decision logic of the monitoring and notification system 250. The logic includes requirements and conditional statements - rules - used to determine the actions to be taken by the monitoring and notification system 250. More specifically, the rule engine is configured to establish and maintain rules for analysing payment transaction data and detecting potential problems in the supply networks, triggering notifications in respect of the detected problems, generating alternative supply-chain rules, and other suitable scenarios that may arise in the operation context of the monitoring and notification system 250. A certain set of rules may be pre-defined, and then be updated and expanded as the behaviour of the supply network and its changes are determined.

As discussed in this disclosure, the monitoring and notification system 250 analyses the payment transaction data to determine and monitor velocities of the supply network's connections to detect potential problems in the supply network. The business engine may maintain a number of rules set in relation to such velocities for detecting potential problems in the supply network, such when a deviation from an established patter should trigger the monitoring and notification system 250 to generate a respective notification.

Additionally or instead, the monitoring and notification system 250 may also analyse the payment transaction data to determine and monitor addition velocities for the supply chains of the supply network. The addition velocities are velocities characterising a supply chain across multiple transactions. For example, an addition velocity may represent a sum of the normal transaction count or transaction amounts for a given merchant or between two directly connected merchants for a given period of time.

In some embodiments, data elements of the payment transaction data, such as specific types of data acquired during payment transaction processing, are "verbalized," for example, in respect of their effect on whether there is a potential problem in a supply chain. Such verbalization enables and improves the user-friendliness of rule-setting process for local administrators (e.g., merchant's administrator), and further enables personalisation of the monitoring and notification system 250 for its users.

Thus, for example, a local administrator may be enabled to set-up rules related to addition velocity through the rule engine as follows:

*If ((the sum of the Transaction Amount of the transactions from a given Acquirer Id + Merchant Id for the past week is zero) or (is 50% less than the lowest weekly sum for the past 12 months))*

*Then Notify the AcquirerId + MerchantId List of any Merchants that normally have an upstream supplier of that AcquirerId + MerchantId*

where "Transaction Amount," "AcquirerId," and "MerchantId" are respectively the DE4, DE32, and DE42 fields from the payment transactiond data describing a given payment transaction.

The anomaly and alternative supply detection engine 258 is configured to detect deviations from the establish behaviour patterns of the supply network in cooperation with the rule engine 256. Once a deviation is detected, the engine 258 provides relevant data in respect of the deviation to the notification engine 257 who determines whether the generation of a notification should be triggered and to what subscribers. The notification engine 257 works in cooperation with the rule engine 256 to make such determinations, where the rule engine 256 establishes and maintains respective rules. The anomaly and alternative supply detection engine 258.

The anomaly alternative supply engine 258 is further configured to determine and propose alternative supply for replacing/modifying the supply chains experiencing potential problems. This process may also be guided by the rules of the rule engine. For example, a particular subscriber may have a preference to exclude certain suppliers from its supply chains and such a rule may be established in the rule engine 256 and applied when alternative supply chains are being determined.

FIGURE 3 shows a flow diagram of a method 300 for detecting and monitoring a supply network including merchant(s) and supplier(s), according to some embodiments of the present invention. The method is suitable to be performed by the monitoring and notification system, such as systems 190 and 250 discussed above in respect of FIGURES 1 and 2 respectively, or a similarly configured server, such as a back-end server, and provides further details on functionalities of the monitoring and notification system.

The method 300 starts with step 305 of acquiring (gathering, collecting, receiving, or the like) payment transaction data from a payment processing network in relation to payment transactions processed by the payment processing network. Such data may be acquired on per-transaction basis, in batches comprising data related to a plurality of payment transactions, in accordance with a pre-defined schedule (e.g., at the end of each day), or as a continuous data stream. The payment transaction data may be provided by the payment processing network in response to a received request or supplied automatically.

The acquired payment transaction data include various types of data describing the payment transactions. For example, the payment transaction data may include the local date and time of the transaction, Acquirer ID, Issuer ID, Acceptor ID, merchant's and/or supplier's address and/or location (e.g., GPS coordinates), SKU describing the type of goods/services exchanged during the payment transaction, currency of the transaction, and/or other data that may be helpful in determining behaviour patterns based one the conducted payment transactions.

The acquired payment transaction data may further be supplemented using additional sources. For example, if the supplier's address and/or location are incomplete, the precise address and/or location may be acquired based on the merchant's ID, using a merchant's database maintained by the payment processing network.

At step 310, the payment transaction data is analysed to detect (build) the supply network or update the supply network. This step includes detecting/updating one or more supply chains forming the supply network, each comprising a plurality of sequential suppliers downstream to a merchant.

In general, the payment transaction data is analysed to detect connections between merchants and/or suppliers. At least one payment transaction related to a purchase made by a merchant from a supplier indicates a connection between the merchant and the supplier. Such a connection may then form a part of one or more supply chains and/or sub-chains of the supply network. Referring to FIGURE 4 showing an example of a supply network 400, a payment transaction between a merchant-2 412 and a supplier-G 422 indicates a connection 423 between these parties that may form a part of a supply chain, for example a supply chain defined by the merchant-2 412, the supplier-G 422, a supplier-D 432, and the supplier-B 442 and respective connections 423, 435, and 445.

Returning to FIGURE 3, in some embodiments, more than one purchase transaction is required before the connection and corresponding supplier and merchant form a part of a supply chain (e.g., 3 payment transactions, a statistically significant number of transactions for the type of goods, and the like). In other embodiments, the determination that a connection and corresponding supplier and merchant form a part of the supply chain of the supply network is made based on a single payment transaction.

Data describing connections between merchants and suppliers in the supply network may be saved within the supply network itself or in association with the supply network, such as in a dedicated connection database, for example as the supply network is being built and/or updated. For a particular connection, such connection data may include some of the payment transaction data describing relevant payment transactions, e.g., location and/or address of the merchant and/or supplier, currency of the transaction, and/or other payment transaction data concerning payment transactions involving the connection.

The connection data may also include data determined based on the payment transaction data and relevant to the detected connections. For example, at step 315, the payment transaction data is further analysed to determine and/or update downstream velocity patterns for the one or more supply chains of the supply network. Such velocity patterns are determined in respect of the connections forming the supply chains and reflect the frequency with which each connection is used by the corresponding merchant and supplier. This may, for example, be determined based on the number of payment transactions between the merchant and supplier and a period over which such transactions were conducted.

Other additional data, relevant to the connections in the supply chain and associated downstream velocity patterns, may also be determined and stored. For example, if payment transactions over a particular connection are typically conducted on the same day of the week, such information may be relevant to determining whether a newly detected pattern represents a deviation from the established pattern. Transit data indicating transit options available for delivery/shipment of goods in proximity of the merchant and/or supplier for a particular connection may be relevant to the determination whether such a connection can be included in an alternative supply chain for remedying a detected supply problem.

In some embodiments, data useful in determining potential connections, and not necessarily related to the existing connection, is also determined and stored in association with the supply network. Examples of such data include, but are not limited to, distance between merchants buying goods of the same type or suppliers supplying goods of the same type of goods (e.g., determined based on their respective locations and SKU descriptors associated with the corresponding payment transactions), indicators of merchants/suppliers located on the same continent, in the same country, state, or other locality (e.g., determined based on their respective addresses), indicators of merchant/suppliers having the same preferred currency (e.g., determined based on currency data of the corresponding payment transactions), typical transaction volumes over a predefined period, and other data.

As new payment transaction data is being analysed, the detected supply network is likely to grow and will become a more accurate representation of the actual supply network. In some embodiments, to ensure that the supply network detected accurately and is representative of the actual supply network, the monitoring and notification system constantly or continuously acquires and analyses the payment transaction data and updates the supply network accordingly. The constant/continuous analysis of the new payment transaction data and corresponding updates of the supply network and associated data also facilitate timely and accurate detection and reporting of potential problems in the supply network (discussed below in greater detail in respect of steps 315 to 325).

As stated above, FIGURE 4 shows an example of the supply network 400 that can be detected and monitored by the monitoring and notification system. The supply network 400 includes a number of merchants, i.e., merchants 410, 412, and 414, and a number of suppliers, i.e., suppliers 420, 422, 430, 432, 434, 440, and 442. A number of supply chains are established in the supply network 400, e.g., a supply chain including a supplier-B 442, who can also be viewed as the originator of this supply chain, a supplier-E 434, a supplier-G 422, and a merchant-3 414 and corresponding connections 447, 437, and 425.

In a supply chain, a supplier may also be a merchant, such as in respect of the upstream suppliers of the supply chain relative the supplier. For example, in the supply chain identified in the previous paragraph, the supplier-E 434 may be viewed as a supplier in relation to any of the suppliers and merchants that are downstream of the supplier-E 434, such as the supplier-G 422 and merchant-3 414. The supplier-E 434 may also be viewed as a merchant in relation to any of the suppliers that are upstream of the supplier-E 434, such as the supplier-B 442.

Returning to FIGURE 3, once the supply network has been established, the payment transaction data may further be analysed to determine deviations from the established patterns of behaviour of the supply network. For example, at step 320, a determination is made whether a deviation from one of the downstream velocity patterns is detected based on the further payment transaction data. For example, if a frequency of the supply by a supplier (e.g., the supplier-B 442 in FIGURE 4) to a merchant (e.g., the supplier-E 434 in FIGURE 4) along the corresponding connection (e.g., the connection 447 in FIGURE 4), as determined based on recent payment transaction data, is abnormally low, when compared to the frequency indicated by the respective downstream velocity pattern for that connection, a deviation is detected for that connection in the supply chain. A respective notification to respective one or more merchants (e.g., the supplier-G 442 and merchant-3 414 in FIGURE 4) indicating a potential problem with the upstream supplier (e.g., the supplier-B 442) may automatically be generated at step 325 for transmission to the merchants.

If no deviations from the established patterns of behaviour of the supply network are detected at step 320, the method 300 returns to step 310 to continue with the analysis of the payment network data and updates to the supply network based on such data. What is considered to be abnormal varies between different implementations and may depend, for example, on the type of goods provided by the supplier to the merchant, a current season, preferences of the merchant(s) downstream, and/or other variables. In some embodiments, one or more pre-defined deviation thresholds are set, using a rule engine, by the merchant(s) that have subscribed to be notified by the monitoring and notification system about potential supply problems. A merchant is then notified about the potential supply problem only if the detected deviation exceeds the pre-defined threshold for that merchant. Therefore, the same detected deviation may trigger the notification process for some merchant(s), and not for other(s).

For example, referring to FIGURE 4 and the supply chain from the supplier-B 442 to the merchant-3 414, the supplier-G 422 and merchant-3 414 may have different pre-defined deviation thresholds, M and N respectively. If a deviation detected for the connection 447 falls within the threshold M, but exceeds the threshold N, then the notification of step 325 is only generated for the merchant-3 414, but not for the supplier-G 422.

In some embodiments, whether the notification is generated at step 325 is determined based on the degree of separation between a particular merchant and a supplier who caused the detected deviation. The degree of separation (separation degree) between a merchant and a supplier reflects how many intermediary supplier(s) are in the supply chain connecting the supplier and the merchant. For example, the separation degree may be the number of the intermediary supplier(s). However, a more complex scheme for determining the separation degree can be used as well. For example, the separation degree can be determined by summing weight values assigned to the intermediary suppliers in the supply chain connecting the merchant and the supplier, where different weight values indicate significance of a particular intermediary supplier for the supply chain (based on the observed patterns of behaviour and/or the merchant's preferences).

The subscribers to the monitoring and notification system are allowed in some embodiments to indicate or set a degree threshold (e.g., a maximum, minimum, or a specific degree) for triggering generation of the notification of step 325. In particular, when the separation degree between a particular merchant and the supplier who caused the detected deviation falls outside such a degree threshold, then the notification of step 325 is generated for the merchant. Using the same example of FIGURE 4, the supplier-G 422 and the merchant-3 414 may be associated with different or the same pre-defined separation degree thresholds (e.g., defined using the rule engine) that would lead to the same or different results in respect of triggering the generation of the notification. For example, if the degree threshold is defined for the supplier-G 422 as the maximum separation by 1 intermediary supplier, and the degree threshold for the merchant-3 414 is defined as the maximum separation by 2 intermediary suppliers, the outcome of whether the generation of the notification is triggered at step 325 in response to a potential problem with the supplier-B 442 will be the same for the supplier-G 422 and merchant-3 414. Making the separation degree threshold the same for the supplier-G 422 and merchant-3 414 however may lead to a different result, for example if the degree of maximum separation is set at 1 intermediary supplier.

Returning to FIGURE 3, at step 330, the notification generated at step 325 is transmitted to the respective merchant(s). Thus, in the example discussed in relation to FIGURE 4, the notification concerning a supply problem associated with the connection 447 and supplier-B 442 may be transmitted to the supplier-G 422, and/or the merchant-3 414. The notification may take the form of an email, a text message, a social media message, an automated voice message, and/or any other form that enables notification of the merchant(s).

In some embodiments, the monitoring and notification system is further configured to determine alternative supply chains for replacing supply chains that may experience supply problems and recommend such alternative supply chains to the relevant merchants. Thus, the method 300 further includes steps 335 of determining one or more alternative supply chain(s) for the merchant(s) affected by the potential supply problem and step 340 of providing such recommendation(s) to the respective merchant(s). For example, in some embodiments, for a given merchant that buys a particular type of good, e.g., as identified by the respective SKU, MCC, or some other unique identified, other merchant(s) that buy the same type of good are determined, and their respective supply chains are analysed to determine one or more alternative supply chains.

The alternative supply chain may be completely different from the affected supply chain or share some of the sub-chains with the affected supply chain. The proposed alternative supply chain may be a completely new supply chain, or it may include one or more sub-chains that already form the supply network. Selection of the suppliers for inclusion into the alternative chain(s) may be based on a number of factors, including but not limited to a type (e.g., computer vs. a television set) and nature (e.g., perishable vs. non-perishable) of products provided by the supplier(s) and received by the merchant(s), a distance between suppliers to be included in the alternative chain and/or to the merchant, weather forecast associated with locations of the suppliers to be included into the alternative chain, transit data associated with transit routes downstream the alternative chain, economical characteristics associated with localities of the suppliers to be included into the alternative supply chain, length of the alternative supply chain and/or affected supply chain, and other factors.

Referring to FIGURE 4, for example, it may be determined at steps 310 and 315 of the method 300 that the supplier-A 440 supplies the same types of goods to the supplier-C 430 (merchant in this particular transaction) as the supplier-B 442 supplies to the supplier-E 434 (merchant in this particular transaction). It may further be determined that that the supplier-C 430 supplies the same types of goods to the supplier-I 420 (merchant in this particular transaction) as the supplier-E 434 supplies to the supplier-G 422 (merchant in this particular transaction). Therefore, is a deviation is detected in relation to the connection 447 in the supply chain comprising the supplier-B 442, supplier-E 434, supplier-G 422, and merchant-2 412, the monitoring and notification system is able to determine and recommend to the merchant-2 412 an alternative supply chain comprising the supplier-A 440, supplier-C 430, supplier-I 420, and merchant-2 412.

In some embodiments, the recommendation of an alternative supply chain is provided to the merchant, such as the merchant-2 412, automatically along with the notification about the potential supply problem. In some embodiments, the recommendation is provided in response to a request issued by the merchant, for example, upon receiving the notification about the problem.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules, apparatuses, or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

The order of execution or performance of the operations in the embodiments illustrated and described herein is not essential, unless otherwise specified. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

While the invention has been described in terms of various specific embodiments, the skilled person would recognize that the invention can be practiced with modification within the spirit and scope of the claims.

## Claims

1.   A computer-implemented method for detecting and monitoring a supply network, the method comprising:

based on payment transaction data acquired through a payment processing network in relation to a first plurality of payment transactions,

detecting, at a server, a first supply chain comprising a plurality of suppliers downstream to a first merchant, and
determining, at the server, for each pair of sequential suppliers in the first supply chain, a downstream velocity pattern of a respective connection linking the pair of sequential suppliers;

detecting, at the server, based on payment transaction data acquired through the payment processing network in relation to a second plurality of payment transactions, a deviation from one of the downstream velocity patterns; and
in response to detecting the deviation, automatically generating at the server a notification, for the first merchant, indicating a potential supply problem with an upstream supplier in the pair associated with the downstream velocity pattern for which the deviation was detected.

2.   The method of claim 1, wherein the server generates the notification if the deviation exceeds a pre-defined deviation threshold and/or the upstream supplier is separated from the merchant by a separation degree outside of a pre-defined degree threshold.

3.   The method of claim 1 or 2, further comprising:

receiving, at the server, from the merchant, input data indicating a preferred deviation value and/or a preferred separation degree for triggering generation of notifications concerning potential supply problems;
if the input data indicating the preferred deviation is received, establishing, through a rule engine of the server and based on the preferred deviation value, a deviation rule defining the deviation threshold; and
if the input data concerning the preferred separation degree is received, establishing, through the rule engine of the server and based on the preferred separation degree, a degree rule defining the degree threshold.

4.   The method of any preceding claim, further comprising for each supplier in the supply network:

determining, by the server, a type of goods or services provided by the supplier, based on stock keeping unit description data acquired through the payment processing network in association with one or more payment transactions between the supplier and a corresponding merchant; and
linking, at the server, the determined type of goods and the supplier.

5.   The method of any preceding claim, further comprising:

determining, for the first merchant, by the server, using data associated with a plurality of supply chains detected by the server in the supply network based on received payment transaction, an alternative supply chain comprising the first supply chain having one or more sequential suppliers, including the upstream supplier, replaced with one or more sequential suppliers of the supply network different from the one or more sequential suppliers of the first supply chain,

wherein a type of goods supplied by a sub-chain consisting of the one or more sequential suppliers of the first supply chain is the same as a type of goods supplied by a sub-chain consisting of the one or more sequential suppliers of the supply network.

6. The method of claim 5, wherein the alternative chain comprises at least one previously undetected connection between suppliers in the supply network.

7. The method of claim 5 or 6, wherein at least some of the one or more sequential suppliers of the supply network replacing the one or more suppliers in the first chain form a sub-chain of a supply chain network previously detected by the server in the supply network.

8. The method of any of claims 5 to 7, wherein the sub-chain consisting of the one or more sequential suppliers of the first supply chain and the sub-chain consisting of the one or more sequential suppliers of the supply network are of different lengths.

9. The method of any of claims 5 to 8 wherein the one or more sequential suppliers of the supply network replacing the one or more sequential suppliers in the first chain are selected from the supply network based on one or more of:

a distance to the first merchant,
a distance to at least one of suppliers in the first supply chain that are being replaced,
a distance to at least one of suppliers remaining the first supply chain,
a distance to at least one other of the one or more sequential suppliers from the supply network,
a weather forecast for locations associated with at least one of the one or more sequential suppliers from the supply network,
transit data for possible transit routes servicing downstream the alternative supply chain, including at least one of the one or more sequential suppliers from the supply network, or
economical characteristics associated with at least one of the one or more sequential suppliers from supply network.

10. The method of any preceding claim further comprising:

transmitting the notification indicating the potential supply problem with the upstream supplier from the server to the first merchant.

11. The method of any preceding claim further comprising:

transmitting the notification indicating the potential supply problem with the upstream supplier from the server to one or more sequential suppliers in the first supply chain that are downstream of the upstream supplier.

12. The method of any preceding claim, further comprising:

based on payment transaction data gathered through the payment processing network in relation to a third plurality of payment transactions, detecting, at the server, a second supply chain comprising a plurality of suppliers downstream to a second merchant; and
determining, at the server, for each pair of sequential suppliers in the second supply chain, a downstream velocity pattern of a respective connection linking the pair of sequential suppliers.

13. The method of claim 12 further comprising:

detecting, at the server, based on payment transaction data acquired through the payment processing network in relation to a fourth plurality of payment transactions, a deviation from one of the downstream velocity patterns associated with the second supply chain;
in response to detecting the deviation for the second supply chain, automatically generating, at the server, a second notification for the second merchant indicating a potential supply problem with an upstream supplier in the second supply chain in the pair associated with the downstream velocity pattern for which the deviation for the second supply chain was detected; and
transmitting the second notification from the server to the second merchant.

14. The method of any claim preceding claim, further comprising:

continuously analysing, b the server, incoming payment transaction data acquired through the payment processing network in relation to payment transactions to detect new supply chains and/or update previously detected supply chains and determine respective velocity patterns.

15. A detection and notification system comprising:

at least one processor;
a server;
a memory storing instructions, which when executed by the least one processor cause the server to carry out the method of any preceding claims to detect and monitor the supply network; and
a storage for maintaining data concerning supply chains and corresponding velocity patterns detected in the supply network.

FIG. 1

## Payment transaction database — 260

| | | | | | |
|---|---|---|---|---|---|
| Trans 1 | Acquirer ID | Issuer ID | Acceptor ID | Address | Sky |
| Trans 2 | | | | | |
| • • • | | | | | |
| Trans N | | | | | |

261 — Trans 1
262 — Trans 2
263 — Trans N

271   272   273   274   275

### Monitoring & notifications system — 250

255 — Supply chain detection engine

256 — Rule engine

252 — Processor(s)

Notifications engine

259 — Supply network database

254 — Memory

257 — Anomaly & alternative supply chain detection engine

258

240 — Network

### Merchant 1 — 210
Processor(s) — 212
Memory — 214
I/O devices — 216
Monitoring & notifications app — 218

### Merchant 2 — 220
Processor(s) — 212
Memory — 214
I/O devices — 216
Monitoring & notifications app — 218

### Merchant 3 — 230
Processor(s) — 212
Memory — 214
I/O devices — 216
Monitoring & notifications app — 218

200

## FIG. 2

Start

Acquire payment transaction data from a payment processing network in relation to payment transactions ~305

Analyse payment transaction data detect/update a supply network comprising one or more supply chains, each comprising a plurality of suppliers downstream to a respective merchant ~310

Determine/update downstream velocity patterns for the one or more supply chains of the supply network ~315

A deviation from one of the downstream velocity patterns is detected based on further payment transaction data? ~320

Automatically generate a notification to the respective merchant(s) indicating a potential supply problem with an upstream supplier ~325

Transmit the notification to the respective merchant(s) ~330

Determine alternative supply chain(s) for the merchant(s) ~335

Provide recommendation(s) of the alternative supply chain(s) to the merchant(s) ~340

End

*300*

# FIG. 3

*440* Supplier A  *442* Supplier B

*441*  *443*  *445*  *447*

*430* Supplier C  *432* Supplier D  *434* Supplier E

*433*  *435*  *437*

*431*

*420* Supplier I  *422* Supplier G

*421*  *427*  *423*  *425*

*410* Merchant 1  *412* Merchant 2  *414* Merchant 3

<u>400</u>

*FIG. 4*

Europäisches
Patentamt

European
Patent Office

Office européen
des brevets

# EUROPEAN SEARCH REPORT

Application Number

EP 15 19 0250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/278205 A1 (CHIN ALFRED [US]) 1 November 2012 (2012-11-01) * page 1, paragraph 5 - paragraph 9 * ----- | 1-15 | INV. G06Q10/08 |

TECHNICAL FIELDS
SEARCHED      (IPC)

G06Q

The present search report has been drawn up for all claims

| Place of search | Date of completion of the search | Examiner |
|---|---|---|
| The Hague | 17 March 2016 | Arbutina, Ljiljana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 0250

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2016

| Patent document cited in search report | Publication date | Patent family member(s) | Publication date |
|---|---|---|---|
| US 2012278205 A1 | 01-11-2012 | US 2012278205 A1<br>WO 2012149455 A2 | 01-11-2012<br>01-11-2012 |

EPO FORM P0459

For more details about this annex : see Official Journal of the European Patent Office, No. 12/82